# DEMANDE DE BREVET EUROPEEN

(11) **EP 4 027 269 A1**
(43) Date de publication de la demande: **13.07.2022**
(21) Numéro de dépôt: 21217780.2
(22) Date de dépôt: 27.12.2021
(51) Int. Cl.: G06N 3/04, G06N 3/08

(54) **PROCÉDÉ DE CONSTRUCTION ET D'ENTRAÎNEMENT D'UN DÉTECTEUR DE LA PRÉSENCE D'ANOMALIES DANS UN SIGNAL TEMPOREL, DISPOSITIFS ET PROCÉDÉ ASSOCIÉS**

(30) Priorité: 28.12.2020 FR 2014188
(71) Demandeur: COMMISSARIAT À L'ÉNERGIE ATOMIQUE ET AUX ÉNERGIES ALTERNATIVES, 75015 Paris (FR)
(72) Inventeur: MALFANTE, Marielle, 38054 GRENOBLE CEDEX 9 (FR)
(74) Mandataire: Lavoix

(57) **Abrégé**

La présente invention décrit un procédé d'entraînement d'un détecteur (16) de la présence d'une anomalie dans un signal relatif à l'environnement acquis par un capteur (14) présentant plusieurs parties de signal regroupant un ensemble d'échantillons temporels successifs, le détecteur (16) comprenant :
- un module d'extraction (21) de caractéristiques propre à appliquer une fonction d'extraction sur le signal, et
- un module de détection (22) de la présence d'une anomalie dans une partie de signal et propre à appliquer une fonction de détection sur une caractéristique représentative de la partie de signal pour déterminer si une anomalie est présente ou non,
le procédé d'entraînement comprenant :
- l'obtention de la fonction d'extraction par utilisation d'un apprentissage auto-supervisé, et
- l'obtention de la fonction de détection par utilisation d'un apprentissage semi-supervisé.

## Description

La présente invention concerne un procédé de construction et d'entraînement d'un détecteur de la présence d'au moins une anomalie dans un signal temporel. La présente invention se rapporte également à un procédé de détection, un détecteur et un dispositif de surveillance associés.

Le domaine des véhicules autonomes est en pleine expansion. Ce développement se heurte notamment aux problématiques liées à la grande diversité des situations auxquelles le véhicule autonome est confronté.

Parmi ces problématiques, la détection de situations anormales est une problématique très importante dans la mesure où les essais de roulage ne permettent pas de tester le véhicule autonome dans toutes les situations et que le comportement du véhicule autonome doit garantir une sécurité à ses occupants en toute circonstance.

En corollaire de cette observation, il n'est pas possible d'obtenir des jeux de données représentatifs de ces situations permettant une évaluation complète et fiable d'équipements destinés à être embarqués dans ces véhicules.

Les solutions proposées à ce jour sont la présence d'un être humain pouvant intervenir à tout moment ou la circulation sur des voies dédiées évitant la survenue de certains imprévus, ce qui bloque le passage à une conduite complètement autonome à grande échelle.

Il existe donc un besoin pour un procédé permettant d'obtenir un détecteur de la présence d'anomalies dans un signal, notamment un signal provenant d'un capteur, qui soit robuste par rapport à la détection de situations anormales encore inconnues.

Pour cela, la présente description porte sur un procédé d'entraînement d'un détecteur d'un dispositif de surveillance d'un environnement, le détecteur étant un détecteur de la présence d'une anomalie dans un signal, le signal étant un signal relatif à l'environnement acquis par un capteur, le signal présentant plusieurs parties de signal, chaque partie de signal regroupant un ensemble d'échantillons temporels successifs, le détecteur comprenant un module d'extraction de caractéristiques, le module d'extraction étant propre à appliquer une fonction d'extraction sur les parties de signal pour obtenir au moins une caractéristique représentative pour chaque partie de signal. Le détecteur comprend un module de détection de la présence d'une anomalie dans une partie de signal, le module de détection étant propre à appliquer une fonction de détection sur l'au moins une caractéristique représentative de la partie de signal pour déterminer si une anomalie est présente ou non dans la partie de signal. Le procédé d'entraînement est mis en œuvre par un module d'entraînement et comprend une étape d'obtention de la fonction d'extraction par utilisation d'une première technique d'apprentissage, la première technique d'apprentissage étant un apprentissage auto-supervisé comprenant une formation d'un premier jeu de données labellisées adapté à une tache prétexte à partir d'un enregistrement d'un signal fourni par ledit capteur, un apprentissage d'un réseau de neurones à convolution à partir du jeu de données labellisé pour obtenir un réseau de neurones appris propre à mettre en œuvre la tâche prétexte, le réseau de neurones comportant des couches convolutionnelles, une couche d'entrée du réseau de neurones mettant en œuvre un filtre convolutionnel réalisant une convolution impliquant au moins deux échantillons temporels distincts d'une partie du signal temporel, une extraction d'une partie du réseau de neurones appris, la partie extraite comprenant les couches convolutionnelles et correspondant à ladite fonction d'extraction. Le procédé d'entraînement comprend une étape d'obtention de la fonction de détection par utilisation d'une deuxième technique d'apprentissage semi-supervisée, le deuxième technique d'apprentissage semi-supervisée permettant notamment de définir les paramètres de la fonction de détection à partir d'un deuxième jeu de données labellisées obtenues à partir d'un enregistrement d'un signal fourni par le capteur et considéré comme normal.

Le procédé d'entraînement permet ainsi de réaliser un entraînement n'impliquant peu ou pas d'intervention humaine et pouvant facilement être embarqué dans des systèmes électroniques de petite taille et peu onéreux.

Pour cela, le procédé d'entraînement est appliqué à un signal 1D, c'est-à-dire un signal donnant une unique valeur à chaque instant d'échantillonnage.

En outre, les entrées du réseau de neurones de la fonction d'extraction correspondent ou sont alimentées par une suite d'échantillons successifs de la grandeur physique mesurée par le capteur.

Cela permet d'assurer une bonne compacité de la solution.

Selon des modes de réalisation particuliers, le procédé d'entraînement présente une ou plusieurs des caractéristiques suivantes, prise(s) isolément ou selon toutes les combinaisons techniquement possibles :
- lors de l'étape d'obtention de la fonction d'extraction, le réseau de neurones à convolution comporte également des couches entièrement connectées, la partie extraite étant les couches convolutionnelles du réseau de neurones appris.
- le dispositif comprend, en outre, un module de classification du signal, le module de classification ayant été appris à l'aide d'un jeu de données, la deuxième technique d'apprentissage utilisée lors de l'étape d'obtention de la fonction de détection utilisant le même jeu de données en considérant le jeu de données comme correspondant à des données dépourvues d'anomalies.

La description décrit également un procédé de détection de la présence d'une anomalie dans un signal, le procédé étant mis en œuvre par un détecteur d'un dispositif de surveillance d'un environnement, le signal étant un signal relatif à l'environnement acquis par un capteur, le signal présentant plusieurs parties de signal, chaque partie de signal regroupant un ensemble d'échantillons temporels successifs, le procédé étant mis en œuvre par un détecteur étant un détecteur de la présence d'une anomalie dans un signal, le détecteur comprenant un module d'extraction de caractéristiques et un module de détection, le procédé de détection comprenant une étape d'extraction de caractéristiques, l'étape d'extraction étant mise en œuvre par le module d'extraction et comprenant l'application d'une fonction d'extraction sur chaque partie de signal pour obtenir au moins une caractéristique représentative pour chaque partie du signal, le module d'extraction comprenant un réseau de neurones incluant des couches convolutionnelles, une couche d'entrée du réseau de neurones mettant en œuvre un filtre convolutionnel réalisant une convolution impliquant au moins deux échantillons temporels distincts d'une partie du signal temporel. Le procédé comprend une étape de détection de la présence d'une anomalie dans une partie de signal, l'étape de détection étant mise en œuvre par le module de détection et comprenant l'application une fonction de détection sur l'au moins une caractéristique représentative de la partie de signal pour déterminer si une anomalie est présente ou non dans la partie de signal, le détecteur ayant été entraîné par un procédé d'entraînement tel que précédemment décrit.

Selon des modes de réalisation particuliers, le procédé de détection présente une ou plusieurs des caractéristiques suivantes, prise(s) isolément ou selon toutes les combinaisons techniquement possibles :
- le dispositif comprend, en outre, un module d'avertissement, le procédé de détection comprenant, en outre, une étape d'avertissement que le module de détection a détecté la présence d'une anomalie dans une partie de signal.
- le dispositif comprend, en outre, une mémoire propre à mémoriser les parties de signal pour lesquelles le module de détection a détecté la présence d'une anomalie, le procédé comportant, en outre, une nouvelle étape d'obtention de la fonction de détection en utilisant un jeu de données comprenant les parties de signal mémorisées.
- le module d'entraînement fait partie du dispositif.

La description décrit également un détecteur d'un dispositif de surveillance d'un environnement, le détecteur étant un détecteur de la présence d'une anomalie dans un signal, le signal étant un signal relatif à l'environnement acquis par un capteur, le signal présentant plusieurs parties de signal, chaque partie de signal regroupant un ensemble d'échantillons temporels successifs, le détecteur comprenant un module d'extraction de caractéristiques, le module d'extraction étant propre à appliquer une fonction d'extraction sur les parties de signal pour obtenir au moins une caractéristique représentative pour chaque partie de signal, le module d'extraction comprenant un réseau de neurones incluant des couches convolutionnelles, une couche d'entrée du réseau de neurones mettant en œuvre un filtre convolutionnel réalisant une convolution impliquant au moins deux échantillons temporels distincts d'une partie du signal temporel. Le détecteur comprend un module de détection de la présence d'une anomalie dans une partie de signal, le module de détection étant propre à appliquer une fonction de détection sur l'au moins une caractéristique représentative de la partie de signal pour déterminer si une anomalie est présente ou non dans la partie de signal, le détecteur ayant été entraîné par un procédé d'entraînement tel que précédemment décrit.

La description concerne aussi un dispositif de surveillance d'un environnement, le dispositif comprenant un capteur propre à acquérir un signal relatif à l'environnement, et un détecteur de la présence d'une anomalie dans le signal acquis par le capteur, le détecteur tel que précédemment décrit.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une représentation schématique d'un exemple de système comportant un détecteur de la présence d'anomalies dans un signal,
- figure 2, une illustration schématique du fonctionnement d'une partie du système de la figure 1,
- figure 3, un ordinogramme d'un exemple de fonctionnement du système de la figure 1,
- figure 4, une représentation schématique d'une partie du système de la figure 1 à certains stades du fonctionnement illustré sur la figure 3, et
- figure 5, une représentation schématique d'un autre exemple de système comportant un détecteur de la présence d'anomalies dans un signal.

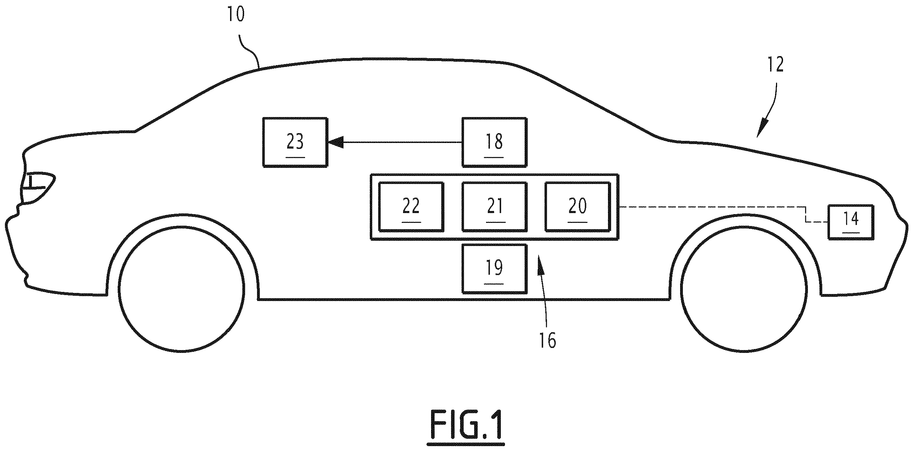

Un système 10 est représenté sur la figure 1.

En l'occurrence, le système 10 est un véhicule et plus précisément une voiture.

Le système 10 comporte un dispositif 12 de surveillance de l'environnement du système 10.

Comme son nom l'indique, le dispositif 12 est propre à surveiller l'environnement.

Dans l'exemple proposé, le dispositif 12 comporte un capteur 14, un détecteur 16, un module d'avertissement 18 et une module d'entraînement 19.

Le capteur 14 est propre à acquérir un signal relatif à l'environnement.

A titre d'illustration pour l'exemple décrit, le capteur 14 est un lidar ou un radar et la grandeur physique est la distance d'un obstacle.

D'autres exemples sont possibles comme un capteur acoustique ou un capteur de température ou un capteur de vibrations.

En l'espèce, le capteur 14 acquiert donc un signal donnant l'évolution d'une grandeur physique avec le temps et délivre un tel signal au détecteur 16.

Le signal délivré est donc un signal temporel ou une série temporelle présentant plusieurs parties de signal.

Le signal est ainsi un signal unidimensionnel, c'est-à-dire qu'il donne l'évolution temporelle d'une unique valeur.

Le détecteur 16 est un détecteur de la présence d'une anomalie dans le signal acquis par le capteur 14, et plus spécifiquement dans une partie de celui-ci.

Une anomalie est une donnée qui s'écarte de manière significative des données usuelles. Les termes de déviation ou de donnée aberrante (plus souvent utilisé sous la dénomination anglaise de « outlier ») sont également utilisés.

Traditionnellement, les anomalies sont réparties en trois catégories distinctes, à savoir les anomalies ponctuelles, les anomalies contextuelles et les anomalies collectives.

Les anomalies ponctuelles correspondent au cas d'un point qui s'éloigne des autres, le plus souvent sans interprétation particulière. De telles anomalies sont parfois désignées selon le terme anglais correspondant, à savoir « point anomalies ».

Les anomalies contextuelles sont des anomalies qui dépendent du contexte et notamment du comportement attendu dans un tel contexte. De telles anomalies sont parfois désignées selon le terme anglais correspondant, à savoir « contextuel anomalies ». Il peut être noté que le terme d'anomalie conditionnelle (plus souvent utilisé sous la dénomination anglaise de « conditional anomaly ») désigne parfois ce type d'anomalies.

Les anomalies collectives rassemblent des données qui prises individuellement paraissent normales mais qui, en combinaison, forment un groupe (un motif) qui est aberrant. De telles anomalies sont parfois désignées selon le terme anglais correspondant, à savoir « collective anomalies ».

La présence d'une anomalie peut provenir d'une pluralité de causes très différentes.

Par exemple, l'anomalie peut être le signe d'une intrusion, d'une attaque, d'une défaillance d'un capteur ou d'une situation non connue.

Le détecteur 16 comporte un module d'entrée 20, un module d'extraction 21 et un module de détection 22.

Le module d'entrée 20 est propre à recevoir le signal provenant du capteur 14 et à conduire le signal reçu sous une forme appropriée pour être injecté en entrée du module d'extraction 21, c'est-à-dire que le module d'entrée 20 vient déterminer les parties du signal qui vont être envoyées ensuite au module d'extraction 21.

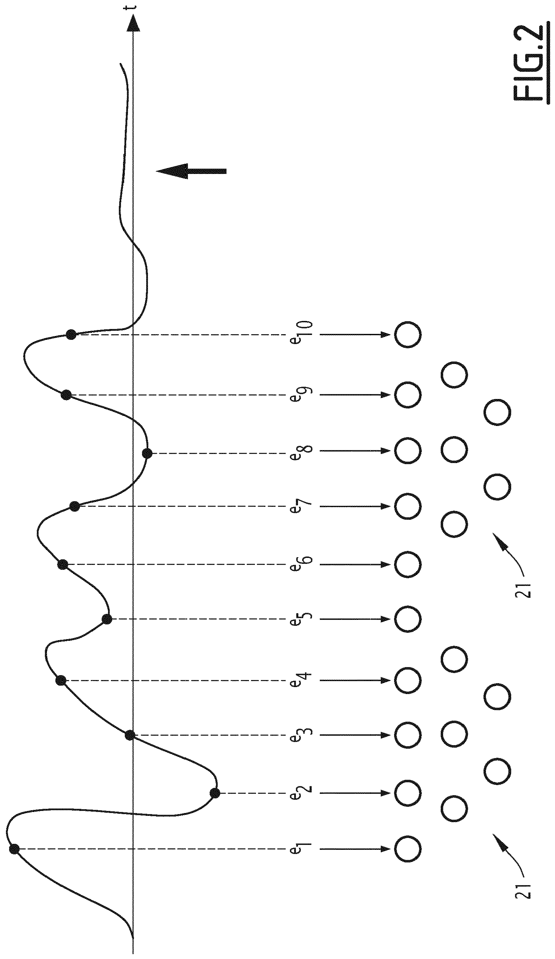

Selon l'exemple décrit, il est supposé que le signal est un signal analogique comme représenté sur la figure 2.

Le module d'extraction 21 comporte un échantillonneur, une unité de mémorisation et une unité de formation.

L'échantillonneur est propre à échantillonner le signal reçu à une fréquence d'échantillonnage pour obtenir des échantillons temporels.

Chaque échantillon à un instant d'échantillonnage représente ainsi une unique valeur.

Les échantillons peuvent être numérisés ou conservés sous forme analogique selon le mode de réalisation du module suivant.

Dans l'exemple proposé, un indice est attribué aux échantillons.

Dans la figure 2, dix échantillons sont représentés.

L'unité de mémorisation est propre à mémoriser des échantillons.

Ici, l'unité de mémorisation est temporaire de sorte que le nombre d'échantillons mémorisé est relativement limité.

Dans la suite, nous verrons qu'il peut être avantageux que le nombre d'échantillons mémorisés soit supérieur au nombre d'échantillons d'une partie.

L'unité de formation est propre à former les parties de signal adaptées pour le module d'extraction 21.

Le module d'extraction 21 impose comme contrainte que chaque partie de signal comporte le même nombre d'échantillons parce que le module d'extraction 21 prend en entrée un nombre fixe d'échantillons.

A titre d'illustration, il est supposé que le module d'extraction 21 traite en entrée un ensemble de cinq échantillons temporels.

Selon un mode de réalisation simple, l'unité de formation utilise une fenêtre temporelle qu'elle vient faire glisser en sélectionnant le nombre d'échantillons temporels adapté.

Avec le même exemple de cinq échantillons temporel, la taille de la fenêtre temporelle est de cinq échantillons et l'unité de formation va préparer une première partie correspondant aux échantillons 1 à 5 puis une deuxième partie correspondant aux échantillons 6 à 10 et ainsi de suite.

Alternativement, les parties peuvent se recouper et, par exemple, l'unité de formation prépare une première partie correspondant aux échantillons 1 à 5 puis une deuxième partie correspondant aux échantillons 2 à 6 et ainsi de suite.

On notera que chaque partie préparée par l'unité de formation vise à fournir une suite d'échantillons consécutifs représentatifs d'un morceau continue du signal temporel. Selon la fréquence d'échantillonnage, le morceau de signal temporel représenté par une sortie de l'unité de formation (une « partie ») peut avoir en pratique une durée temporelle différente. Ainsi, si la fréquence d'échantillonnage peut varier du simple au double, la durée correspondante du morceau de signal peut elle aussi varier du simple au double. La durée du morceau de signal représentée par une partie de signal formée d'échantillons est par la suite appelée durée Dp de la partie de signal.

Suivant un mode de réalisation possible, dans lequel on souhaite observer des morceaux de signal de taille différentes, donc des durées Dp différentes, on peut faire varier la fréquence d'échantillonnage de l'unité de formation. Pour ce faire, on peut éventuellement disposer d'un échantillonneur fonctionnant à la fréquence maximale souhaitée et, réaliser un sous-échantillonnage des sorties de l'échantillonneur pour émuler un échantillonnage à plus faible fréquence. L'unité de formation sélectionne dans ce cas des échantillons non consécutifs, en formant par exemple, une partie de signal à partir des échantillons pairs.

La première partie de signal regroupera alors les échantillons 2, 4, 6, 8 et 10.

En complément, l'unité de formation comporte éventuellement une unité de sélection afin de transmettre une partie de signal au module d'extraction 21 uniquement si celle-ci vérifie un critère prédéfini.

A titre d'exemple, si la partie correspond à un moment où le capteur 14 n'enregistre aucun signal, il n'est pas nécessaire de déterminer si une anomalie est présente ou non. Un exemple d'une telle partie est pointée par une double flèche sur la figure 2.

Pour cela, l'unité de sélection peut appliquer un critère comparant l'amplitude du signal à un seuil, sur une durée correspond à un morceau de signal, notamment sur la durée Dp correspond à une potentielle partie du signal que l'on souhaiterait par suite transmettre au module d'extraction 21.

Le module d'entrée 20 permet ainsi d'obtenir un ensemble de parties du signal, présentant des durées Dp identiques ou éventuellement différentes.

Cet ensemble de parties du signal correspond à un jeu de données non labellisé. Le module d'extraction 21 est un module d'extraction de caractéristiques.

Selon l'exemple décrit, le module d'extraction 21 est propre à appliquer une première fonction, dite fonction d'extraction, au signal pour obtenir au moins une caractéristique représentative pour une partie de signal.

Plus précisément, dans l'exemple décrit le module d'extraction 21 va recevoir en entrée une première partie de signal correspondant aux échantillons 1 à 5, leur appliquer la fonction d'extraction et en déduire au moins une caractéristique représentative de la première partie.

Puis, le module d'extraction 21 va recevoir en entrée une deuxième partie de signal correspondant aux échantillons 6 à 10, leur appliquer la fonction d'extraction et en déduire au moins une caractéristique représentative de la deuxième partie. Et ainsi de suite pour d'autres parties du signal transmises par le module de formation au module d'extraction 21.

Des exemples de caractéristiques sont proposés ultérieurement.

Le module de détection 22 est un module de détection de la présence d'une anomalie dans une partie de signal.

Le module de détection 22 est propre à appliquer une deuxième fonction, dite fonction de détection, sur l'au moins une caractéristique extraite pour déterminer si une anomalie est présente ou non dans la partie de signal.

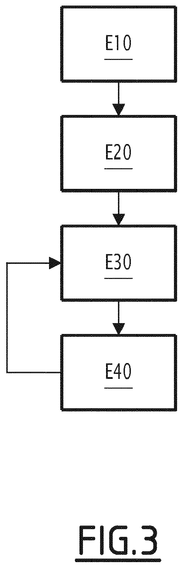

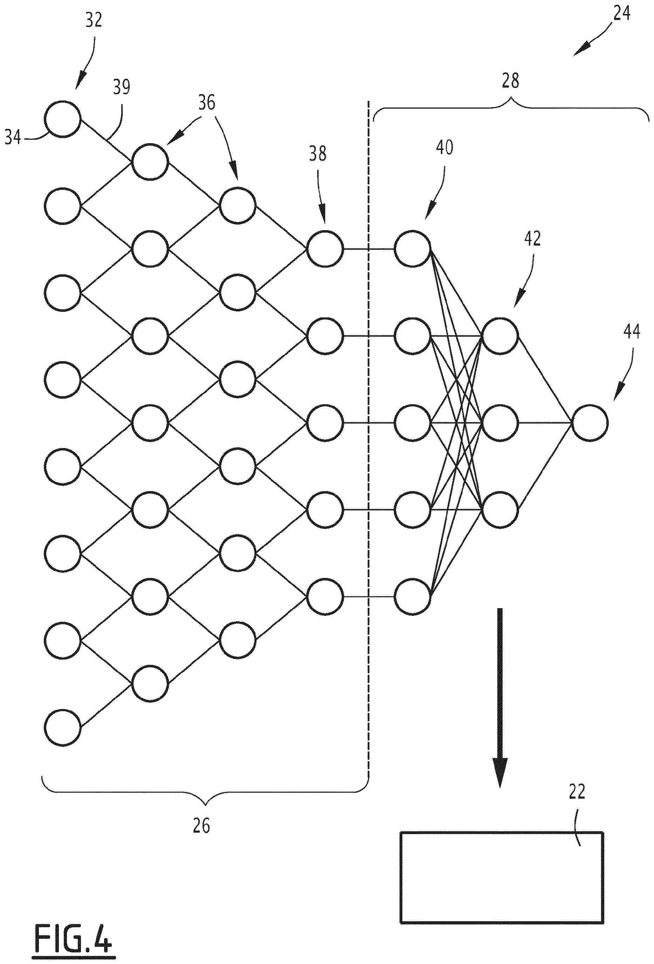

La nature des deux fonctions ainsi que la manière dont le module d'entraînement 19 les obtient seront décrites ultérieurement en référence aux figures 3 et 4.

Le module d'avertissement 18 est propre à avertir que le module de détection 22 a détecté la présence d'une anomalie dans une partie de signal.

Par exemple, le module d'avertissement 18 est une interface homme-machine, visuelle, sonore, haptique ou autre, éventuellement mixte.

En variante ou en complément, le module d'avertissement 18 est un dispositif émettant un avertissement par exemple sous la forme d'un signal électronique, à destination d'un dispositif de contrôle 23 général du véhicule 10.

Le module d'entraînement 19 est propre à entraîner le détecteur 16.

Cela signifie que le module d'entraînement 19 est propre à entraîner les fonctions d'extraction et de détection pour obtenir les plus appropriées en fonction des données dont le module d'entraînement 19 dispose.

En particulier, lorsque le module d'entraînement 19 fonctionnera avant la mise en marche du détecteur 16, le module d'entraînement 19 est un module d'initialisation.

Dans l'exemple décrit, le module d'entraînement 19 est également apte à entraîner le détecteur 16 sur la base de données obtenues au cours du fonctionnement du détecteur 16. Le module d'entraînement 19 est alors un module d'ajustement.

Le fonctionnement du système 10 est maintenant décrit en référence à l'ordinogramme de la figure 3 qui présente une succession d'étapes pouvant être mises en œuvre pour permettre une bonne détection des anomalies présentes dans une série temporelle.

Lors d'une première étape E10, le module d'entraînement 19 obtient la première fonction, c'est-à-dire la fonction d'extraction, par application d'une première technique d'apprentissage.

La fonction d'extraction est une partie d'un réseau de neurones 24 dont un exemple est représenté schématiquement sur la figure 4.

Le réseau de neurones 24 est un réseau de neurones particulier, en l'occurrence un réseau de neurones convolutionnel qui pourrait être qualifié de type temporel.

Dans ce qui suit, en décrivant la figure 4, chacune des notions de « réseau de neurones », « réseau de neurones convolutionnel » et « de type temporel » sont expliquées successivement.

Le réseau de neurones 24 comporte deux ensembles de couches 26 et 28 formant deux sous-réseaux de neurones.

Chaque ensemble 26 ou 28 comporte une succession ordonnée de couches 32 de neurones 34 dont chacune prend ses entrées sur les sorties de la couche 32 précédente.

Plus précisément, chaque couche 32 comprend des neurones 34 prenant leurs entrées sur les sorties des neurones 34 de la couche 32 précédente.

En variante, des structures de réseaux de neurones plus complexes peuvent être envisagés avec une couche qui peut être reliée à une couche plus lointaine que la couche immédiatement précédente.

À chaque neurone 34 est également associée une opération, c'est-à-dire un type de traitement, à effectuer par ledit neurone 34 au sein de la couche de traitement correspondante.

Dans le cas de la figure 4, le premier ensemble 26 comporte des couches de neurones cachée 36 (deux sont visibles sur la figure 4 mais ce nombre n'est pas limitatif). Cela signifie que le premier ensemble comporte une couche d'entrée suivie par les couches de neurones cachées 36, l'ensemble étant suivie par une couche de sortie 38.

Chaque couche 32 est reliée par une pluralité de synapses 39. Un poids synaptique est associé à chaque synapse 39. C'est souvent un nombre réel, qui prend des valeurs positives comme négatives. Dans certains cas, le poids synaptique est un nombre complexe.

Chaque neurone 34 est propre à effectuer une somme pondérée des valeur(s) reçue(s) de la part des neurones 34 de la couche 32 précédente, chaque valeur étant alors multipliée par le poids synaptique respectif, puis à appliquer une fonction d'activation, typiquement une fonction non-linéaire, à ladite somme pondérée, et à délivrer aux neurones 34 de la couche 32 suivante la valeur résultant de l'application de la fonction d'activation. La fonction d'activation permet d'introduire une non-linéarité dans le traitement effectué par chaque neurone 34. La fonction sigmoïde, la fonction tangente hyperbolique, la fonction de Heaviside sont des exemples de fonctions d'activation.

En complément facultatif, chaque neurone 34 est également apte à appliquer, en outre, un facteur multiplicatif, également appelé biais, à la sortie de la fonction d'activation, et la valeur délivrée aux neurones 34 de la couche 32 suivante est alors le produit de la valeur de biais et de la valeur en sortie de la fonction d'activation.

Similairement, le deuxième sous-ensemble 28 comporte une couche d'entrée 40 reliée à une couche de neurones cachées 42, elle-même reliée à une couche de sortie 44.

Les éléments de description précédents permettent de mieux appréhender la notion de réseau de neurones.

Il convient maintenant d'expliquer ce qu'est un réseau de neurones à convolution.

Un réseau de neurones à convolution est aussi parfois dénommé réseau de neurones convolutif ou par le sigle CNN qui renvoie à la dénomination anglaise de *« Convolutional Neural Networks ».*

Dans un réseau de neurones à convolution, chaque neurone d'une même couche présente exactement le même schéma de connexion que ses neurones voisins mais à différentes positions d'entrée. Le motif de connexion est appelé noyau de convolution ou, plus souvent, « kernel » en référence à la dénomination anglaise correspondante.

Ici, le premier ensemble 26 rassemble les couches de neurones effectuant une opération de convolution aussi appelées couches convolutionnelles (ce qui correspond à l'opération de filtrage du signal par le kernel).

Les couches convolutionnelles permettent d'obtenir une représentation des parties de signal qui soit la plus commode possible pour la fonction utilisant cette représentation, notamment pour le deuxième ensemble 28 qui est utilisé pour réaliser une tâche prétexte comme expliqué infra ou pour le module de détection 22 également décrit infra.

De manière imagée et simplifiée, en assimilant une représentation à un espace, le premier ensemble 26 effectue une projection des parties de signaux dans cet espace de représentation. Un exemple de caractéristique associée à une partie de signal que le premier ensemble 26 est propre à trouver est ainsi l'équivalent d'une coordonnée de la partie dans cet espace de représentation.

Le deuxième ensemble 28 rassemble dans cet exemple des couches entièrement connectées.

Une couche de neurones 32 entièrement connectée est une couche dans laquelle les neurones de la couche sont chacun connectés à tous les neurones de la couche précédente.

Un tel type de couche 32 est plus souvent dénommée selon le terme anglais de « fully connected » et parfois désignée sous la dénomination « couche dense ».

Le deuxième ensemble 28 est l'ensemble qui va permettre de réaliser une tâche prétexte à partir des parties représentées selon la représentation précitée.

Un tel réseau de neurones 24 peut comprendre d'autres couches qui ne sont pas décrites dans ce qui suit.

A titre d'exemple, le réseau de neurones 24 comporte une ou plusieurs couches de mise en commun (par exemple, de moyennage, ou de « max pooling » en anglais), une couche de correction (plus souvent désignée par l'acronyme ReLu renvoyant à la dénomination anglaise de « Rectified Linear Unit » qui signifie littéralement « unité linéaire rectifiée) ou couche de perte (il s'agit souvent d'une couche dite « softmax » puisqu'elle utilise une fonction softmax ou exponentielle normalisée).

En outre, il a été indiqué que le réseau de neurones à convolution est de type temporel.

Cela signifie que le réseau de neurones 24 présente au moins un kernel, ou filtre convolutionnel, qui effectue une convolution impliquant au moins deux échantillons temporels distincts d'une partie du signal temporel.

Une telle convolution « temporelle » est au moins mise en œuvre en entrée du réseau de neurones 24, soit en entrée du premier ensemble 26.

Après avoir décrit structurellement le réseau de neurones 24, il est maintenant décrit comme le réseau de neurones 24 est appris.

Dans l'exemple décrit, le module d'entraînement 19 utilise, comme première technique d'apprentissage, une technique d'apprentissage auto-supervisé.

L'apprentissage auto-supervisé est plus souvent désigné par l'acronyme SSL renvoyant à la dénomination anglaise correspondante de « self-supervised learning ».

Un tel apprentissage relève d'un apprentissage supervisé par la machine, c'est-à-dire un apprentissage durant lequel il est possible d'ajuster le réseau de neurones, notamment les valeurs de ses poids synaptiques, en apprenant itérativement à l'aide d'une fonction de coût basée sur la comparaison de la différence entre la sortie du réseau de neurones et la sortie attendue. Un apprentissage supervisé se base sur un jeu de données d'apprentissage, des données dites labellisées, définissant un ensemble de couple d'entrées/sorties correspondant pour chaque couple à une donnée attendue pour une entrée donnée.

Toutefois, l'apprentissage auto-supervisé est spécifique en ce sens où il est mis en oeuvre à partir d'un jeu de données initiales connues qui ne correspond pas à un jeu de données labellisées telles que définies ci-dessus et qui ne permet pas de mettre en œuvre directement un apprentissage supervisé. L'apprentissage auto-supervisé comprend une étape initiale de création automatique d'un jeu de données labellisés, à partir d'un ensemble de données initiales correspondant à un ou plusieurs extraits de signaux issus du capteur considérés comme « normal », c'est-à-dire sans anomalies, et connaissant une tâche prétexte mise en œuvre dans une deuxième étape suivant cette étape initiale de création d'un jeu de données labellisées.

En l'occurrence, le module d'entraînement 19 utilise une tâche prédéfinie qui n'a pas de lien avec la tâche de déterminer la présence d'anomalies. La tâche prédéfinie sert uniquement à permettre l'apprentissage des paramètres libres du réseau de neurones qui sont définis à travers l'opération d'apprentissage. En ce sens, la tâche prédéfinie peut être qualifiée de tâche prétexte, dénomination qui sera utilisée dans ce qui suit.

Dans un exemple de mise en œuvre, la tâche prétexte utilisée par le module d'entraînement 19 est une tâche de prédiction de la valeur du signal à un instant donné sur la base d'un nombre prédéfini de valeurs antérieures.

Ainsi, si on considère par exemple le cas où notre réseau de neurones 24 aurait 5 entrées sur sa couche d'entrée, la tache prétexte proposée consiste à fournir cinq valeurs d'échantillons consécutifs du signal du capteur 14 en entrée du réseau de neurones 24 et à prédire, sur une sortie de la couche de sortie 44, la sixième valeur, ou valeur suivante d'échantillon du signal du capteur 14. Ces données d'entrée (les 5 valeurs) et le résultat attendu en sortie (la sixième valeur) constitue ainsi un couple de données labellisées.

L'ensemble des cinq valeurs antérieures du signal du capteur 14 et de la sixième valeur forme une donnée d'un premier jeu de données d'apprentissage utilisé ensuite dans la mise en œuvre de l'opération d'apprentissage supervisé visant à définir les paramètres libres du réseau de neurones 24 quand il est conçu pour mettre en œuvre la tâche prétexte.

Dans un tel mode de réalisation, il est intéressant que l'unité de mémorisation temporaire du module d'entrée 20 mémorise plus d'échantillons temporels que le nombre d'échantillons d'une partie de signal telle que définie supra et utilisée in fine dans le cadre d'une utilisation du détecteur 16 en condition de fonctionnement. Ainsi, si l'unité de mémorisation du module 20 comprend par exemple une centaine d'éléments de mémorisation permettant de mémoriser une centaines d'échantillons d'un extrait de signal du capteur, alors il est possible de fabriquer de nombreux couples de données labellisées selon le processus décrit ci-dessus. On peut ainsi créer un premier jeu de données d'apprentissage comprenant une pluralité de couples d'entrées/sorties labellisés utilisable pour ce premier apprentissage supervisé basé sur une tache prétexte. En variante, le module d'entraînement 19 utilise comme tâche prétexte de compléter un ensemble de valeurs manquantes dans les signaux temporels du capteur 14.

Par exemple, il s'agira de prédire le troisième échantillon temporel connaissant le premier échantillon temporel, le deuxième, le quatrième, le cinquième et le sixième.

En variante, on peut utiliser une tâche prétexte du type reconstruction de données d'entrée.

Pour cela, le réseau de neurones complet 24 présente la forme d'un autoencodeur (plus souvent désigné par la dénomination anglaise correspondante d'« auto-encoder »). Ainsi, contrairement à ce qui est représenté en figure 4, un tel réseau de neurones 24 aurait un nombre de sorties du réseau identique au nombre d'entrées du réseau.

Le module d'entraînement 19 met alors en œuvre un apprentissage d'un réseau de neurones 24 à partir d'un jeu de données labellisées qui est dans ce cas particulier aisément construit dans la mesure où les valeurs de sorties attendues pour des valeurs d'entrée sont identiques.

Autrement formulé, le module d'entraînement 19 ajuste les paramètres du réseau de neurones 24 afin qu'une inférence à travers le réseau de neurones 24 permette de retrouver des sorties aussi proches que possibles des valeurs d'entrée.

Le module d'entraînement 19 permet ainsi d'obtenir un premier réseau 24 appris selon ce premier apprentissage auto-supervisé.

Le module d'entraînement 19 extrait ensuite les couches convolutionnelles du premier réseau de neurones 24 appris pour obtenir la fonction d'extraction.

La fonction d'extraction est ainsi le réseau de neurones d'extraction correspondant au premier ensemble 26, c'est-à-dire l'ensemble des couches de convolution du réseau de neurones 24 appris.

Une telle opération revient à négliger les couches entièrement connectées et plus spécifiquement à considérer que l'ensemble des couches convolutionnelles permet d'obtenir en sortie un modèle de représentation des données temporelles (ici le signal du capteur) qui est fiable et suffisamment riche pour être réutilisé par la suite.

Lors de la deuxième étape E20, le module d'entraînement 19 apprend la deuxième fonction, c'est-à-dire la fonction de détection.

Plus précisément, le module d'entraînement 19 va ajuster les paramètres de la fonction de détection d'anomalies.

Cela est schématiquement représenté sur la figure 4 par une flèche indiquant que le deuxième ensemble 28 est remplacé par le module de détection 22, et plus précisément par la fonction de détection.

Pour cela, le module d'entraînement 19 utilise une deuxième technique d'apprentissage qui diffère de la première technique d'apprentissage.

La deuxième technique d'apprentissage est une technique d'apprentissage semi-supervisée de l'ensemble du premier réseau de neurones et de la fonction de détection d'anomalies qui forme un classifieur, en pratique un classifieur à une classe indiquant si il y a ou non une anomalie présente dans la partie de signal considérée.

La fonction de détection d'anomalies peut être mise en œuvre par des modèles variés. On peut par exemple utiliser l'algorithme OC-SVM (de l'anglais « One-class Support Vector Machine » qui signifie littéralement « Machine à vecteurs de support à une classe ») ou l'algorithme SVDD (de l'anglais « Support Vector Data Description » qui signifie littéralement « Description de données de vecteurs de support ») ou l'algorithme de forêts d'isolation. Il est également possible d'utiliser une fonction de détection construite sur la base d'un réseau de neurones.

Il convient de préciser ici sur quels paramètres portent l'apprentissage. En l'espèce, les paramètres ajustables de la fonction de détection d'anomalies sont appris afin qu'un calcul (ou une inférence dans le cas d'un réseau de neurones) à travers le classifieur permette de retrouver la valeur de sortie attendue, parmi « anomalie » ou « normal » pour une valeur d'entrée donnée que l'on sait normale ou anormale.

On notera qu'au cours de cette deuxième étape E20, le réseau de neurone appris, et notamment la partie conservée, à savoir le réseau de neurones 26, reste inchangée. Dans le cas particulier où la fonction de détection 22 est mise en œuvre par un réseau de neurones, il est éventuellement possible d'autoriser de légères modifications des paramètres du premier réseau de neurones 26, notamment de ses dernières couches, dans une plage de variation prédéfinie des valeurs de synapses pour réaliser un réglage d'affinage (ou « fine tuning » en anglais).

Selon l'exemple décrit, il est supposé qu'on ne dispose pas de données anormales.

La technique d'apprentissage est alors semi-supervisée en ce sens que le module d'entraînement 19 fournira en entrée du classifieur uniquement des données normales ou nominales et pas des données anormales.

Bien entendu, dans l'hypothèse où des données anormales seraient connues, il serait possible de mettre en œuvre un apprentissage supervisé utilisant ces données anormales, et cela conduirait selon toute vraisemblance à de meilleurs résultats.

Toutefois, dans le cas d'espèce, les données anormales sont des données ne faisant pas partie du jeu de données d'apprentissage utilisé par module d'entraînement 19.

Dans une telle situation où il y a une seule classe (normales ici) dans le jeu de données d'apprentissage, il est souvent employé le terme de classifieur à une classe (plus souvent utilisé avec la dénomination anglaise correspondante de « one-class classifiers ») pour désigner le classifieur.

Plus généralement, un apprentissage semi-supervisé est un apprentissage basé sur un jeu de données d'apprentissage dans lequel une classe (ici données anormales) n'est pas présente.

Lors de cette deuxième opération d'apprentissage, lors de l'étape E20, on réalise ainsi plusieurs fois un calcul à travers le détecteur 22 pour en définir les paramètres libres du modèle de détection. Le détecteur 22 est composé du premier réseau de neurones appris 26 dont les sorties sont reliées à des entrées du modèle de détection. Une opération élémentaire de cette deuxième apprentissage consiste donc à placer en entrée du premier réseau de neurones appris 26 une partie de signal considérée comme normale, à calculer les sorties du premier réseau de neurones 26 correspondantes puis à les injecter dans le modèle de détection avec ces valeurs courantes de paramètres libres. La sortie obtenue en sortie du modèle de détection est jugée normale ou anormale par le modèle de détection, ou de façon plus fine on obtient en sortie du modèle de détection une évaluation, par exemple probabiliste, de la normalité de la partie de signal considérée. En fonction de l'écart entre le résultat attendu, correspondant à « pleinement normal » et le degré de normalité obtenu, le mécanisme d'apprentissage rétroagit sur les paramètres libres du modèle de détection afin d'induire un changement des valeurs de ces paramètres permettant au modèle de détection de considérer une telle donnée d'entrée comme normale. On répète ainsi cette opération pour différentes parties de signal jugées normales. Les parties de signal jugées normales et constituant une deuxième base de données labellisées utilisées dans ce deuxième apprentissage peuvent être constituées à partir d'un enregistrement d'un signal du capteur, pouvant par exemple être le même que celui utilisé pour préparer le premier jeu de données labellisées. On notera toutefois que les premier et deuxième jeux de données labellisées utilisées pour les première et deuxième opérations d'apprentissage sont à priori différentes dans la mesure où les modèles, ou réseaux, appris sont différents.

A l'issue des deux premières étapes E10 et E20, il est ainsi obtenu un détecteur 16 comprenant la fonction d'extraction 21, correspondant au premier réseau appris 26, suivie du modèle de détection 22.

L'ensemble des deux étapes E10 et E20 peut être vu comme une phase d'apprentissage initiale du détecteur 16.

La troisième étape E30 correspond à l'utilisation du détecteur 16 ainsi appris.

En fonctionnement, le détecteur 16 reçoit donc des parties de signal provenant du capteur 14 et détermine si ces parties sont normales ou non.

Le détecteur 16 réalise cette tâche de manière automatique.

Pour cela, le détecteur 16 utilise des techniques d'intelligences artificielles reposant sur deux composantes distinctes : un modèle de représentation des données déterminé par le module d'extraction 21 et un modèle d'analyse des données déterminé par le module de détection 22.

L'emploi d'une technique d'apprentissage auto-supervisée pour définir le réseau de neurones d'extraction permet d'obtenir un modèle de représentation très pertinent pour la détection de la présence d'anomalies au moyen du module de détection 22 se basant sur les sorties du modèle de représentation, sous la forme d'une réseau de neurones convolutionnel 26.

Il est à noter que le modèle de représentation peut aussi être pertinent pour d'autres applications, de sorte qu'il est possible que le module d'extraction 21 soit simultanément utilisé pour obtenir d'autres résultats, typiquement par utilisation d'un autre réseau de neurones prenant en entrée les sorties du module d'extraction 21.

En outre, un tel modèle de représentation est obtenu avec une relaxation significative de la contrainte sur le jeu d'apprentissage. En effet, aucune labellisation manuelle n'est requise.

Plus précisément, partant d'un jeu de données non labellisé, le procédé propose de former un premier jeu de données labellisées pour une tâche prétexte pour apprendre une partie du détecteur 16 et après apprendre l'autre partie sur la base d'un deuxième jeu de données labellisés, les jeux de données labellisées étant réalisées automatiquement à partir d'un enregistrement d'un signal de capteur considéré par un humain comme fiable. On notera que le premier jeu de données labellisées peut éventuellement être construit à partir d'un enregistrement d'un signal de capteur non validé par un humain contrairement au deuxième jeu de données.

Comme le modèle de représentation est de bonne qualité, le dispositif de détection d'anomalies est robuste par rapport à la détection de situations anormales non connues.

Les parties considérées comme anormales peuvent être mémorisées dans une unité de mémorisation non représentée sur la figure 1 pour une exploitation ultérieure.

Dans l'exemple proposé, les données mémorisées peuvent permettre d'améliorer le dispositif de détection d'anomalies.

Lors de la quatrième étape E40, le module d'entraînement 19 utilise les données mémorisées dans l'unité de mémorisation pour effectuer un nouvel apprentissage de la fonction de détection.

Dans l'exemple décrit, le module d'entraînement 19 effectue l'apprentissage à l'aide d'un apprentissage supervisé en utilisant les données anormales obtenues à l'issue de la troisième étape E30.

Du fait de l'utilisation de nouvelles données, la fonction de détection peut être rendue plus précise.

La nouvelle fonction de détection est alors utilisée lors de la troisième étape E30.

A nouveau, en fonctionnement, des données anormales vont être mémorisées et un nouvel apprentissage pourra être réalisé par le module d'entraînement 19 lors de la quatrième étape E40.

La fonction de détection ainsi apprise pourra alors être utilisée lors de la troisième étape E30 et ainsi de suite.

La quatrième étape E40 correspond ainsi à un apprentissage incrémental de la fonction de détection et par là, du détecteur 16.

La quatrième étape E40 peut être initiée par le dispositif de contrôle 23 général du véhicule 10.

Un tel apprentissage permet d'obtenir le détecteur 16 le mieux adapté aux données dont on dispose.

Cela rend le dispositif de détection 12 particulièrement adapté pour toutes les applications de surveillance, et pas uniquement dans un système embarqué de véhicule.

Plus spécifiquement, le dispositif de détection 12 est approprié pour des environnements peu ou mal connus, comme la surveillance de zones géographiques (par exemple peu peuplées tel un glacier, des forêts, des rivières, des océans, des zones côtières des applications pour des zones peuplées étant également possibles, notamment la détection de cris dans une foule), la surveillance de constructions (bâtiments, ponts ou éoliennes), la surveillance de risques géologiques (séismes ou volcans) voire même du corps humain. Pour ce dernier point, il peut être envisagé d'utiliser le système de bracelet connecté pouvant déterminer la survenue d'une crise d'épilepsie, une crise cardiaque ou une crise allergique.

En outre, le dispositif de détection 12 peut être implémenté physiquement avec peu de contraintes.

Par exemple, pour une réalisation à base de circuit(s) intégré(s) dédié(s), le détecteur 16 est par exemple réalisé sous forme d'un ASIC (de l'anglais «Application Specific Integrated Circuit » signifiant littéralement « circuit intégré propre à une application »).

Selon une variante, le module d'extraction 21 et le module de détection 22 sont réalisés chacun sous forme d'un composant logique programmable, tel qu'un FPGA (de l'anglais « Field Programmable Gâte Array » souvent traduit par l'expression « réseau de portes programmables *in situ »).*

Selon un autre exemple, lorsque le détecteur 16 est mis en œuvre par un processeur, ou autre unité de calcul équivalente, le processeur peut exécuter un programme correspondant à un ou plusieurs logiciels, c'est-à-dire sous forme d'un programme ordinateur. De tels programmes exécutables, permettant la mise en œuvre du procédé susmentionné peuvent être enregistrés sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Du fait qu'il est possible d'envisager des réalisations de faible taille et de consommation relativement faible, un tel dispositif de détection 12 est utilisable dans des systèmes embarqués, notamment comme faisant partie d'un capteur intelligent. Dans ce cas, la mise en œuvre du procédé selon l'invention peut être en tout ou partie réalisée au moyen de circuits hardware dédié. Sur de tels systèmes embarqués, on pourra notamment utiliser un circuit dédié pour la réalisation de fonctions de type réseaux de neurones. En outre, un même circuit de calcul neuronal générique peut être utilisé pour les réseaux 26, 28 et également pour réaliser le module de détection 22 quand celui-ci est réalisé à partir d'un réseau de neurones. De tels circuit de calcul neuronal générique sont généralement couplés à des mémoires mémorisant les différents paramètres des réseaux de neurones. Le détecteur 16 pourra ainsi comprendre un micro-processeur pour lancer différentes opérations du procédé susmentionné, en faisant appel à des éléments matériels dédiés. Parmi ces éléments matériels dédiés on pourra, outre les éléments de calcul neuronal précédemment indiqués, avoir des éléments dédiés au traitement du signal provenant du capteur, pour son échantillonnage, sa conversion analogique/numérique, sa mémorisation d'une portion temporelle dans une mémoire tampon. En outre, le microprocesseur pourra être relié à d'autres composants matériels pour réaliser les fonctions d'avertissement susmentionnées.

Selon une variante de réalisation, permettant d'avoir un système embarqué très compact, la mise en œuvre des étapes E10 et E20 d'apprentissage du procédé peuvent être réalisées sur un processeur distant, et seul le résultat de l'apprentissage est mis en mémoire dans une mémoire du système embarqué. Le système embarqué comprend alors uniquement les éléments matériels nécessaires pour mettre en œuvre l'étape de détection E30.

Dans cette variante, le système embarqué peut éventuellement disposer d'une mémoire pour stocker les parties du signal temporel issu du capteur ayant conduit à la détection d'une anomalie. Une telle mémorisation du signal en lien avec l'anomalie permet ensuite de réaliser la mise en œuvre de l'étape E40 à l'aide d'un processeur distant en lui transmettant les données anormales, puis en recevant en retour une éventuelle mise à jour des paramètres du modèle de détection 22 et éventuellement du réseau de neurones 26.

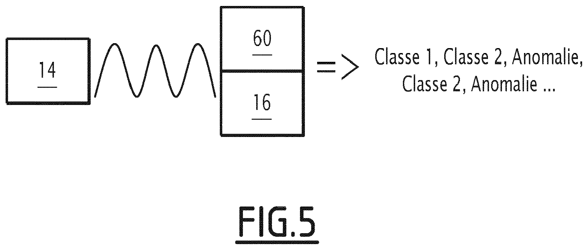

Selon un autre exemple d'application représenté schématiquement sur la figure 5, le dispositif 12 peut comprendre, en outre, un module de classification du signal 60, le module de classification 60 ayant été appris à l'aide d'un jeu de données adéquates.

Le module de classification 60 est, par exemple, appris selon une technique d'apprentissage supervisé.

Le jeu de données peut également être utilisé pour l'apprentissage de la fonction de détection en considérant le jeu de données comme correspondant à des données dépourvues d'anomalies.

Le module de classification 60 sort selon l'exemple proposé les classes 1 ou 2 en fonction de l'entrée.

Dans un tel exemple, le détecteur 16 sert à compléter les informations du module de classification 60 en ajoutant une classe correspondant à des données anormales si le module de classification 60 n'est pas capable de détecter la présence d'une anomalie.

Il est également à noter que, dans le mode de réalisation décrit, l'apprentissage se fait localement via le module d'entraînement 19 mais il est possible d'effectuer l'apprentissage hors ligne avec un module d'entraînement qui serait, par exemple, un ordinateur générique.

Dans un tel cas, le module d'entraînement 19 peut également être utilisé uniquement pour l'initialisation du détecteur 16 et n'effectuer aucun apprentissage incrémental du détecteur 16. En variante, le module d'entrainement 19 distant peut être sollicité pour un apprentissage incrémental également.

Dans chacun des cas, le dispositif de détection 12 permet de détecter de manière robuste des anomalies dans un signal.

## Revendications

1. Procédé d'entraînement d'un détecteur (16) d'un dispositif (12) de surveillance d'un environnement, le dispositif (12) comprenant un module d'entraînement (19), le détecteur (16) étant un détecteur de la présence d'une anomalie dans un signal, le signal étant un signal donnant l'évolution d'une grandeur physique avec le temps et relatif à l'environnement acquis par un capteur (14), le signal étant une série temporelle présentant plusieurs parties de signal, chaque partie de signal regroupant un ensemble d'échantillons temporels successifs de la même grandeur physique, le détecteur (16) comprenant :
- un module d'extraction (21) de caractéristiques, le module d'extraction (21) étant propre à appliquer une fonction d'extraction sur les parties de signal pour obtenir au moins une caractéristique représentative pour chaque partie de signal, et
- un module de détection (22) de la présence d'une anomalie dans une partie de signal, le module de détection (22) étant propre à appliquer une fonction de détection sur l'au moins une caractéristique représentative de la partie de signal pour déterminer si une anomalie est présente ou non dans la partie de signal, e procédé d'entraînement étant mis en œuvre par le module d'entraînement (19) et comprenant :
- une étape d'obtention de la fonction d'extraction par utilisation d'une première technique d'apprentissage, la première technique d'apprentissage étant un apprentissage auto-supervisé comprenant :
- une formation d'un premier jeu de données labellisées adapté à une tache prétexte, le premier jeu de données labellisées étant un ensemble de parties de signal obtenu à partir d'un enregistrement d'un signal de la même grandeur physique fourni par ledit capteur (14),
- un apprentissage d'un réseau de neurones à convolution à partir du jeu de données labellisé pour obtenir un réseau de neurones appris propre à mettre en œuvre la tâche prétexte, le réseau de neurones comportant des couches convolutionnelles, une couche d'entrée du réseau de neurones mettant en œuvre un filtre convolutionnel réalisant une convolution impliquant au moins deux échantillons temporels distincts d'une partie du signal temporel,
- une extraction d'une partie du réseau de neurones appris, la partie extraite comprenant les couches convolutionnelles et correspondant à ladite fonction d'extraction, et
- une étape d'obtention de la fonction de détection par utilisation d'une deuxième technique d'apprentissage semi-supervisée permettant de définir les paramètres de la fonction de détection à partir d'un deuxième jeu de données labellisées obtenues à partir d'un enregistrement d'un signal fourni par le capteur (14) et considéré comme normal.

2. Procédé d'entraînement selon la revendication 1, dans lequel, lors de l'étape d'obtention de la fonction d'extraction, le réseau de neurones à convolution comporte également des couches entièrement connectées, la partie extraite étant les couches convolutionnelles du réseau de neurones appris.

3. Procédé d'entraînement selon la revendication 1 ou 2, dans lequel le dispositif (12) comprend, en outre, un module de classification du signal, le module de classification ayant été appris à l'aide d'un jeu de données, la deuxième technique d'apprentissage utilisée lors de l'étape d'obtention de la fonction de détection utilisant le même jeu de données en considérant le jeu de données comme correspondant à des données dépourvues d'anomalies.

4. Procédé de détection de la présence d'une anomalie dans un signal, le procédé étant mis en œuvre par un détecteur (16) d'un dispositif (12) de surveillance d'un environnement, le signal étant un signal relatif à l'environnement acquis par un capteur (14), le signal présentant plusieurs parties de signal, chaque partie de signal regroupant un ensemble d'échantillons temporels successifs, le procédé étant mis en œuvre par un détecteur (16) étant un détecteur de la présence d'une anomalie dans un signal, le détecteur (16) comprenant un module d'extraction (21) de caractéristiques et un module de détection (22), le procédé de détection comprenant :
- une étape d'extraction de caractéristiques, l'étape d'extraction étant mise en œuvre par le module d'extraction (21) et comprenant l'application d'une fonction d'extraction sur chaque partie de signal pour obtenir au moins une caractéristique représentative pour chaque partie du signal, le module d'extraction (21) comprenant un réseau de neurones incluant des couches convolutionnelles, une couche d'entrée du réseau de neurones mettant en œuvre un filtre convolutionnel réalisant une convolution impliquant au moins deux échantillons temporels distincts d'une partie du signal temporel, et
- une étape de détection de la présence d'une anomalie dans une partie de signal, l'étape de détection étant mise en œuvre par le module de détection (22) et comprenant l'application une fonction de détection sur l'au moins une caractéristique représentative de la partie de signal pour déterminer si une anomalie est présente ou non dans la partie de signal,
le détecteur (16) ayant été entraîné par un procédé d'entraînement selon l'une quelconque des revendications 1 à 3.

5. Procédé de détection selon la revendication 4, dans lequel le dispositif (12) comprend, en outre, un module d'avertissement (18), le procédé de détection comprenant, en outre, une étape d'avertissement que le module de détection (22) a détecté la présence d'une anomalie dans une partie de signal.

6. Procédé de détection selon la revendication 4 ou 5, dans lequel le dispositif (12) comprend, en outre, une mémoire propre à mémoriser les parties de signal pour lesquelles le module de détection (22) a détecté la présence d'une anomalie, le procédé comportant, en outre, une nouvelle étape d'obtention de la fonction de détection en utilisant un jeu de données comprenant les parties de signal mémorisées.

7. Détecteur (16) d'un dispositif (12) de surveillance d'un environnement, le détecteur (16) étant un détecteur de la présence d'une anomalie dans un signal, le signal étant un signal relatif à l'environnement acquis par un capteur (14), le signal présentant plusieurs parties de signal, chaque partie de signal regroupant un ensemble d'échantillons temporels successifs, le détecteur (16) comprenant :
- un module d'extraction (21) de caractéristiques, le module d'extraction (21) étant propre à appliquer une fonction d'extraction sur les parties de signal pour obtenir au moins une caractéristique représentative pour chaque partie de signal, le module d'extraction (21) comprenant un réseau de neurones incluant des couches convolutionnelles, une couche d'entrée du réseau de neurones mettant en œuvre un filtre convolutionnel réalisant une convolution impliquant au moins deux échantillons temporels distincts d'une partie du signal temporel, et
- un module de détection (22) de la présence d'une anomalie dans une partie de signal, le module de détection (22) étant propre à appliquer une fonction de détection sur l'au moins une caractéristique représentative de la partie de signal pour déterminer si une anomalie est présente ou non dans la partie de signal,
le détecteur (16) ayant été entraîné par un procédé d'entraînement selon l'une quelconque des revendications 1 à 3.

8. Dispositif (12) de surveillance d'un environnement, le dispositif (12) comprenant :
- un capteur (14) propre à acquérir un signal relatif à l'environnement, et
- un détecteur (16) de la présence d'une anomalie dans le signal acquis par le capteur (14), le détecteur (16) étant selon la revendication 7.
